(19) Europäisches Patentamt
European Patent Office
Office européen des brevets

(11) **EP 1 060 372 B1**

(12) **EUROPÄISCHE PATENTSCHRIFT**

(45) Veröffentlichungstag und Bekanntmachung des Hinweises auf die Patenterteilung:
**15.10.2003 Patentblatt 2003/42**

(51) Int Cl.⁷: **G01L 1/24**, G01L 11/02, G02B 6/16, H01S 3/06

(21) Anmeldenummer: **99900050.8**

(22) Anmeldetag: **14.01.1999**

(86) Internationale Anmeldenummer:
**PCT/CH99/00017**

(87) Internationale Veröffentlichungsnummer:
**WO 99/044023 (02.09.1999 Gazette 1999/35)**

(54) **FASERLASER-SENSOR**

FIBRE LASER SENSOR

CAPTEUR A LASER A FIBRE

(84) Benannte Vertragsstaaten:
**DE FR GB**

(30) Priorität: **25.02.1998 DE 19807891**

(43) Veröffentlichungstag der Anmeldung:
**20.12.2000 Patentblatt 2000/51**

(73) Patentinhaber: **ABB RESEARCH LTD.**
**8050 Zürich (CH)**

(72) Erfinder:
• **BOHNERT, Klaus**
**CH-5452 Niederrohrdorf (CH)**
• **BRÄNDLE, Hubert**
**CH-8102 Oberengstringen (CH)**

(74) Vertreter: **ABB Patent Attorneys**
**c/o ABB Schweiz AG**
**Brown Boveri Strasse 6**
**5400 Baden (CH)**

(56) Entgegenhaltungen:
**US-A- 5 455 835** **US-A- 5 515 459**
**US-A- 5 546 481** **US-A- 5 561 675**
**US-A- 5 564 832** **US-A- 5 591 965**

**Beschreibung**

## TECHNISCHES GEBIET

Die Erfindung bezieht sich auf das Gebiet der optischen Druckmessung. Sie geht aus von einem faseroptischen Laser nach dem Oberbegriff der Ansprüche 1 und 12.

## STAND DER TECHNIK

Bei der Erdölförderung müssen Bohrlöcher hinsichtlich Druck und Temperatur überwacht werden. Im Bohrloch können die Flüssigkeitsdrücke bis zu 100 MPa (1000 bar) und die Temperaturen bis zu über 200 °C betragen. Zur Druckmessung bis zu ca. 170 °C werden häufig elektrische Sensoren eingesetzt, wie z. B. Piezowiderstände, piezoelektrische Elemente, kapazitive Sonden oder Kristallresonatoren. Bekannt ist auch die Verwendung optischer Drucksensoren, die sich durch gute Hochtemperaturtauglichkeit, Korrosionsbeständigkeit und elektromagnetische Störunempfindlichkeit auszeichnen. Beispiele hierfür sind mechanische Resonatoren, die optisch aktiviert und optisch ausgelesen werden, elastooptische Sensoren, optische Sensoren mit druckempfindlicher Membran oder Fabry - Perot Resonatoren.

Polarimetrische Faser - Laser Sensoren sind z. B. aus dem Artikel von H. K. Kim et al., "Polarimetric fiber laser sensors", Optics Letters 18 (4), S. 317- 319 (1993) bekannt. In einer Nd - dotierten Faser mit rundem Kern und dichroitisch verspiegelten, für Pumplicht transparenten Enden werden ein oder mehrere longitudinale Moden zum Lasen gebracht. Durch unidirektionalen seitlichen Druck wird in der Faser Doppelbrechung erzeugt und eine Frequenzverschiebung zwischen den orthogonalen Eigenpolarisationen der longitudinalen Moden induziert. Im ausgekoppelten Strahl werden die Eigenpolarisationen von einem linearen Analysator zur Interferenz gebracht und das resultierende Schwebungssignal mit einer Photodiode detektiert. Die Schwebungsfrequenz kann sehr einfach mit einem Frequenzzähler gemessen werden. Sie stellt ein hochpräzises Mass für den unidirektionalen Druck auf den Faser - Laser dar. Hydrostatische Drücke können jedoch in dieser Anordnung nicht gemessen werden.

In dem Artikel von G. A. Ball et al., "Polarimetric heterodyning Bragg - grating fiber - laser sensor", Optics Letters 18 (22), S. 1976 - 1978, wird ein ähnlich aufgebauter Dehungssensor vorgestellt. Anstelle der beiden Spiegel werden zur Begrenzung der Laserkavität zwei direkt in den Faserkern geschriebene Bragg - Gitter verwendet. Wegen der geringen Kavitätslänge von 2,5 cm und der schwachen Elliptizität des Faserkerns sind genau zwei orthogonal polarisierte Longitudinalmoden mit einer relativ niedrigen, gut messbaren Schwebungsfrequenz anregbar. Mit einem solchen Faser - Laser Sensor ist jede veränderliche Grösse messbar, welche eine Variation der Länge oder Doppelbrechung der Laserkavität bewirkt. Absolutmessungen z. B. eines Drucks sind aber schwierig oder unmöglich, da Temperaturschwankungen, Änderungen optischer Parameter durch Materialermüdung u. ä. den Arbeitspunkt, d. h. die Schwebungsfrequenz im unbelasteten Zustand, willkürlich verschieben können.

Ein analog aufgebauter Sensor ist in US-A-5'564'832 offenbart. Es handelt sich dabei um einen Faserlaser-Sensor mit einer einstückigen, doppelbrechenden Laserfaser, welche durch zwei Bragg-Gitter begrenzt ist. Äussere Störungen werden auf die Laserfaser ausgeübt. US-A-5'561'675 beschreibt allgemein einen Faserlaser mit einer einstückigen, doppelbrechenden Faser, in welche zwei Bragg-Gitter als Reflektoren für den Faserlaser geschrieben sind.

In der Veröffentlichung von J. P. Dakin et al., "Compensated polarimetric sensor using polarisation - maintaining fibre in a differential configuration", Electronic Letters 20 (1), S. 51 - 53 (1983) wird ein passiver faseroptischer Sensor gezeigt, der aus zwei identischen, um 90° verdrehten und zusammengespleissten Teilstücken einer polarisationserhaltenden Faser besteht. Ein Teilstück wird der Messgrösse, z. B. Temperatur, Dehnung oder akustischen Wellen, und beide Teilstücke der isotropen Störgrösse, z. B. allseitigem Druck oder Temperatur, ausgesetzt. Diese differentielle Anordnung ist auch besonders gut mit niederkohärenten Halbleiterlasern kompatibel, weil das durch Phasenrauschen der Lichtquelle verursachte Intensitätsrauschen weitgehend kompensiert ist. Die Detektion des interferometrischen, periodischen Signals ist allerdings wesentlich aufwendiger als die Detektion frequenzkodierter Signale von aktiven Faserlaser Sensoren.

Serielles Multiplexen passiver Faser - Bragg - Gitter Sensoren ist z. B. aus dem U. S. Pat. No. 4,761,073 bekannt. Entlang einer Sensorfaser sind mehrere Bragg - Gitter mit unterschiedlichen Reflexionswellenlängen eingeschrieben. Durch Messung der Verschiebungen der Reflexionswellenlängen sind die Dehnungen an den Orten der Bragg - Gitter bestimmbar. Thermisch induzierte Gitterdehnungen können mit Hilfe superponierter Gitter unterschiedlicher Reflexionswellenlängen eliminiert werden. Bekanntermassen ist die Ortsbestimmung statt durch wellenlängenselektive auch durch zeitaufgelöste Messungen mit einer gepulsten Lichtquelle möglich. Bei der Dehnungsmessung mit Bragg - Gittern ist der Messbereich aufgrund der Faserbruchgefahr eingeschränkt. Darüberhinaus sind Bragg - Gitter zur Messung hydrostatischer oder isotroper Drücke weitgehend ungeeignet bzw. extrem unempfindlich.

In dem Artikel "Perturbation Effects on Mode Propagation in Highly Elliptical Core Two - Mode Fibers" von S. - Y. Huang et al. wird aufgezeigt, dass in einer polarisationserhaltenden Zweimodenfaser durch homogenen, allseitigen oder radialen Druck, aber auch durch axiale Dehnung, Verdrillung und Temperatur, eine Phasenverschiebung sowohl zwischen den Polarisationsmoden als auch zwischen den räumlichen Moden erzeugbar ist.

## DARSTELLUNG DER ERFINDUNG

Aufgabe der vorliegenden Erfindung ist es, einen Faserlaser - Sensor anzugeben, welcher zur frequenzkodierten Messung von isotropen Drücken, Dehnungen oder Temperaturen geeignet ist und sich durch einen grossen Messbereich, einen einfachen Aufbau und einfache Multiplexierbarkeit auszeichnet. Diese Aufgabe wird erfindungsgemäss durch die Merkmale des Anspruchs 1 und 12 gelöst.

Kern der Erfindung ist es nämlich, in der Laserkavität eines Faserlasers neben einer als Lasermedium wirkenden dotierten Faser eine Sensorfaser mit einer nicht rotationssymmetrischen Struktur anzuordnen, in welcher durch allseitigen Druck eine Doppelbrechung und eine druckproportionale Schwebungsfrequenz zwischen unterschiedlichen Polarisationsmoden oder räumlichen Moden induzierbar ist.

Ein Ausführungsbeispiel zeigt den optischen Aufbau eines Faserlaser - Drucksensors mit einer temperaturkompensierten Sensorfaser, die aus zwei um 90° zueinander verdrehten Fasersegmenten besteht. Im differentiellen Betrieb werden beide Segmente der Störgrösse, z. B. der Temperatur, und nur ein Segment der Messgrösse, z. B. dem Druck, ausgesetzt.

Ein weiteres Ausführungsbeispiel stellt eine serielle Anordnung mehrerer Faserlaser - Drucksensoren mit unterschiedlichen Emissionswellenlängen dar, die über eine gemeiname Pumplichtquelle gespiesen werden und deren druckproportionale Schwebungsfrequenzen wellenlängenselektiv detektiert werden.

Andere Ausführungsbeispiele betreffen Druckgehäuse für Faserlaser, bei denen die laserverstärkende Faser und ein Sensorfasersegment in einer Kapillare oder Kammer unter Niederdruckgas oder Vakuum stehen und ein Sensorfasersegment mit dem zu messenden Medium in Druckkontakt steht.

Zusätzliche Ausführungsbeispiele ergeben sich durch Kombination erfindungswesentlicher Merkmale und aus den abhängigen Ansprüchen.

Ein wichtiger Vorteil des erfindungsgemässen Faserlaser - Drucksensors besteht darin, dass mit dem frequenzkodierten Drucksignal eine hohe Messgenauigkeit, ein grosser Druckmessbereich bis zu 100 MPa und eine gute Eichbarkeit auf Absolutdrücke erzielbar sind.

Ein wesentlicher Vorteil des Faserlaser - Drucksensors besteht auch darin, dass die Parameter der Verstärker- und Sensorfaser unabhängig voneinander optimierbar sind. Insbesondere sind kommerziell erhältliche, Erbium - dotierte Verstärkerfasern und Zweimoden - Sensorfasern mit elliptischem Kern verwendbar.

Ein weiterer Vorteil des Faserlaser - Drucksensors besteht darin, dass die Temperaturempfindlichkeit durch den differentiellen Aufbau der Sensorfaser weitgehend zurückgedrängt ist, zusätzlich aus der Bragg - Wellenlänge die Temperatur bestimmbar ist und dadurch die Zuverlässigkeit (quasi)statischer Druckmessungen deutlich verbessert ist.

Sehr vorteilhaft ist schliesslich auch der kompakte und robuste Aufbau, durch den der Faserlaser - Drucksensor hervorragend für den Einsatz unter hohen Drücken und Temperaturen und insbesondere zur Druckmessung in Erdölbohrlöchern geeignet ist

## KURZE BESCHREIBUNG DER ZEICHNUNG

Die Erfindung wird nachstehend anhand von Ausführungsbeispielen erläutert. Es zeigen:

Fig. 1         a) einen optischen Aufbau eines Faserlaser - Drucksensors mit temperaturkompensierter polarimetrischer Sensorfaser und aktiver Polarisationskontrolle; b) Beispiele für nicht rotationssymmetrische Sensor-fasern;

Fig. 2         a), b) Frequenzverschiebung von Longitudinalmoden durch druck- oder temperaturinduzierte Doppelbrechung in der Sensorfaser; c) Longitudinalmoden eines Faserlasers und Reflexionsspektren von Faser - Bragg - Gitter Endreflektoren;

Fig. 3         eine Detektionseinheit für einen Faserlaser - Drucksensor gemäss Fig. 1 ohne Polarisationskontrolle;

Fig. 4         einen optischen Aufbau eines Faserlaser - Drucksensors mit temperaturkompensierter Zweimoden - Sensorfaser und Faserpolarisator;

Fig. 5         eine Multiplex - Anordnung von Faserlaser - Drucksensoren mit unterschiedlichen Emissionswellenlängen ($\lambda_1$, ..., $\lambda_n$);

Fig. 6 - 8     verschiedene Druckgehäuse für einen Faserlaser mit langgestrecker Sensorfaser;

In den Figuren sind gleiche Teile mit gleichen Bezugszeichen versehen.

**WEGE ZUR AUSFÜHRUNG DER ERFINDUNG**

Fig. 1a zeigt ein Ausführungsbeispiel eines Faserlaser - Drucksensors 1, der insbesondere zur Druckmessung in Erdölbohrlöchern geeignet ist. Der Sensor 1 umfasst eine Pumplichtquelle 8, Zuführungsfasern 7a - 7d, einen Faserlaser 2, der eine laserverstärkende Faser 3 und mindestens zwei Endreflektoren 4a, 4b aufweist, eine Detektionseinheit 12 und eine Auswerteelektronik 17. Zwischen den Endreflektoren 4a, 4b ist eine Sensorfaser 5, 5a, 5b mit einer bezüglich der Faserlängsachse nicht rotationssymmetrischen Struktur angeordnet. Bevorzugt weist die Sensorfaser 5, 5a, 5b einen elliptischen Kern auf und ist unmittelbar als ganzes oder teilweise einem zu messenden Druck, insbesondere einem radial wirkenden hydrostatischen Druck, ausgesetzt. Generell kann die Sensorfaser 5 einstückig oder für eine inhärente Temperaturkompensation zweistückig 5a, 5b ausgeführt sein. Die Endreflektoren 4a, 4b sind auf einfache Weise als Faser - Bragg - Gitter 4a, 4b realisierbar. In der dargestellten Reflexionskonfiguration steht die Pumplichtquelle 8, der Faserlaser 2 und die Detektionseinheit 12 durch einen vorzugsweise wellenlängenselektiven Faserkoppler 9 in optischer Verbindung. Die Detektionseinheit 12 umfasst einen Analysator 14, einen Detektor 15 und insbesondere eine aktive Polarisationskontrolle 13. Der Detektor 15 ist über eine Signalleitung 16 mit der Auswerteelektronik 17 verbunden, die ihrerseits einen Frequenzfilter 18 und einen Frequenzzähler 19 aufweist. Typischerweise sind die Fasern 3, 4a, 4b, 5a, 5b durch Spleisse 10a -10f miteinander und mit den Zuführungsfasern 7b, 7d verbunden und bilden einen mechanisch stabilen Aufbau. Ein optischer Isolator 11 zwischen dem Faserkoppler 9 und der Detektionseinheit 12 ist nützlich zur Unterdrückung von Rückreflexen in den Faserlaser 2.

Die Sensorfaser 5, 5a, 5b soll mehrere, vorzugsweise zwei, Polarisations- oder Raummoden tragen, zwischen denen durch druckabhängige Doppelbrechung eine differentielle Phasenverschiebung induziert werden kann. Mit Vorteil handelt es sich daher bei der Sensorfaser 5, 5a, 5b um eine als Polarimeter wirkende Monomodefaser (Fig. 1) oder besonders bevorzugt um eine Zweimodenfaser (Fig. 4). Als rotationsasymmetrische Sensorfasern 5, 5a, 5b sind doppelbrechende Fasern, insbesondere stark doppelbrechende oder polarisationserhaltende Fasern, gut geeignet. Polarisationserhaltende Fasern mit elliptischem Kern sind als Zweimodenfasern einsetzbar. Neben Fasern mit elliptischem Kern (forminduzierte Doppelbrechung) sind auch solche mit "bow - tie" - Struktur, "panda" - Struktur oder einer elliptischen inneren oder äusseren Faserhülle (stressinduzierte Doppelbrechung) gebräuchlich. Diese Typen sind in dem Artikel von K.-H. Tsai et al., "General Solutions for Stress-Induced Polarization in Optical Fibers", Journal of Lightwave Technology Vol. 9, Nr. 1, 1991 dargestellt. Fasern mit forminduzierter Doppelbrechung verursachen bei weitem die geringsten temperaturbedingten Phasenverschiebungen. Fig. 1b zeigt als weitere Beispiele für doppelbrechende Sensorfasern 5, 5a, 5b eine Faser (A) mit elliptischem oder rundem Kern 51 und angeschliffener Hülle 52 ("D-shape" Struktur) und eine Faser (C) mit rundem Kern 51, runder Hülle 52 und Seitenlöchern 53 ("side-hole" Struktur). Eine Besonderheit stellt die doppelbrechungsfreie Faser (B) mit rundem Kern 51 und teilweise angeschliffener, rotationsasymmetrischer Faserhülle 52 dar. Die Faserhülle 52 kann einseitig, zweiseitig oder mehrseitig angeschliffen sein, so dass durch isotropen Druck die Entartung der Polarisationsmoden aufgehoben und die gewünschte Doppelbrechung induziert wird.

Ein erhebliches Problem für die Messgenauigkeit eines Faserlaser - Drucksensors 1 besteht darin, dass die Doppelbrechung von Sensorfasern 5, 5a, 5b oftmals temperaturabhängig ist. Eine vorteilhafte Ausnahme stellt die Faser (B) dar. Im Fall eines polarimetrischen Drucksensors 1 ist eine weitgehende Temperaturunempfindlichkeit durch den erfindungsgemässen differentiellen Aufbau der Sensorfaser 5a, 5b gemäss Fig. 1a realisierbar. Die Sensorfaser 5a, 5b besteht aus genau zwei Fasersegmenten 5a, 5b, die hinsichtlich ihrer Faserparameter, insbesondere der Grösse und Temperaturabhängigkeit der Doppelbrechung, und ihrer Länge zumindest weitgehend identisch sind, die um 90° zueinander verdreht sind und vorzugsweise über einen Spleiss 6 miteinander in optischer Verbindung stehen. Der 90° - Rotationswinkel sollte mit einer Genauigkeit von ± 30°, insbesondere ±10° eingehalten sein. Man erhält aber schon bei von 0° abweichenden Rotationswinkeln temperaturunabhängige Schwebungssignale. Wenn die Störgrösse (Temperatur) auf beide Segmente 5a, 5b und die Messgrösse (Druck) nur auf ein Segment 5a oder 5b wirken, werden die Störeffekte genau kompensiert und die Messgrösse extrahiert. Natürlich können auch mehrere Mess - und/oder Referenz - Fasersegmente 5a, 5b vorhanden sein. Ein wesentlicher Vorteil dieser Anordnung ist die gute absolute Eichbarkeit des Drucksignals, da dem Druck 0 bei beliebigen Temperaturen idealerweise die Schwebungsfrequenz 0 entspricht. Auch kann ein statischer Referenzdruck, der auf das vom Medium 30 abgeschirmte Referenzfasersegment 5a: 5b einwirkt, so vorgegeben werden, dass die Schwebungsfrequenz um einen gewünschten additiven Wert reduziert wird. Wenn die Fasersegmente 5a, 5b unterschiedliche Faserparameter (Kerngrösse, Elliptizität, Indexsprung, usw.) haben, sollen ihre Längen so gewählt sein, dass die durch temperaturabhängige Doppelbrechung hervorgerufenen Phasenverschiebungen weitgehend gleich sind. Die Entartung der Eigenfrequenzen bei verschwindendem Druck ist dann i. a. aufgehoben.

Im Falle einer Zweimoden - Sensorfaser (Fig. 4) sollen die Segmente 5a, 5b parallel unter 0° oder orthogonal unter 90° zueinander orientiert sein. Die Winkelbereiche sollen wieder vorzugsweise ± 30°, insbesondere =10° betragen. Die parallele Orientierung hat den Vorzug, dass eine Kompensation temperaturinduzierter Phasenverschiebungen genau bei identischen Längen von Segmenten 5a, 5b des gleichen Fasertyps erzielbar ist. Temperaturunabhängige Schwebungssignale treten aber schon bei von 90° abweichenden Rotationswinkeln auf. Die Spleisse 10c, 6 und 10d sind transversal verschoben, so dass im ersten Segment 5a beide Raummoden $LP_{01}$ und $LP_{11}^{gerade}$ angeregt werden, beide Raummoden beim Übertritt in das Segment 5b uber Kreuz gekoppelt werden und die Interferenz beider Raummoden in die Zufuhrungsfaser 7d oder 7b eingekoppelt wird. Bei Druck auf ein Fasersegment 5a; 5b wird die Doppelbrechung zwischen den Raummoden modifiziert, eine Phasenverschiebung induziert und im Faserlaser eine Frequenzverstimmung und Schwebungsfrequenzen zwischen den Raummoden erzeugt. Aufgrund der differentiellen Anordnung der Fasersegmente 5a, 5b ist wiederum eine temperaturkompensierte Druckmessung realisierbar. Alternativ dazu ist auch eine rein passive Temperaturkompensation mit einer einstückigen Sensorfaser 5 möglich. Bei Zweimodenfasern existiert nämlich eine charakteristische Wellenlänge $\lambda_c$, bei welcher die Gruppengeschwindigkeiten beider Raummoden $LP_{01}$ und $LP_{11}^{gerade}$ gleich sind und keine temperaturinduzierten Phasenverschiebungen zwischen den Moden auftreten. Somit ist ein weitgehend temperaturkompensierter Faserlaser - Drucksensor 1 dadurch realisierbar, dass die Emissionswellenlänge, d. h. die Bragg - Wellenlänge $\lambda_B$ der Faser - Bragg - Gitter 4a, 4b, im Spektralbereich einer verschwindenden Doppelbrechung der Gruppenbrechungsindizes der Sensorfaser 5, 5a, 5b gewählt ist.

Ergänzend oder alternativ zu passiven Temperaturkompensationsanordnungen ist sowohl bei polarimetrischen als auch bei Zweimoden - Sensorfasern 5, 5a, 5b eine aktive Temperaturmessung und Drucksignalkorrektur durchführbar, indem beispielsweise die Bragg - Wellenlänge ($\lambda_B$) als Mass für die Temperatur Verwendung findet. Beispielsweise kann zwischen dem Isolator 11 und der Polarisationskontrolle 13 ein zusätzlicher Faserkoppler mit einem optischen Wellenlängenmeter (nicht dargestellt) vorgesehen sein und mit Hilfe einer geeichten Wellenlängenmessung die absolute Temperatur des Faserlasers 2 bestimmt werden.

Anhand von Fig. 2 soll die Funktionsweise des Faserlasers 2 und einer zweistückigen Sensorfaser 5, 5a, 5b näher erläutert werden. Der Faserlaser 2 stellt eine Laserkavität mit Longitudinalmoden 33 dar (Fig. 2a, 2b). Deren Eigenfrequenzen sind dadurch charakterisiert, dass die optische Länge des Faserlasers 2 durch ganzzahlige Vielfache der halben Laserwellenlänge ausgefüllt ist. Der Frequenzabstand $\Delta \nu_o$ zwischen benachbarten Longitudinalmoden 33 ist unter Vernachlässigung von Dispersionseffekten aequidistant und beträgt für einen in das erste Sensorfasersegment 5a eingekoppelten Polarisationsmode x, y oder Raummode $LP_{01}$, $LP_{11}^{gerade}$

$$\Delta \nu_o = c/[2 \cdot (n_d \cdot L_d + n_a \cdot L_a + n_b \cdot L_b)] \,, \qquad \text{(G1)}$$

wobei c = Lichtgeschwindigkeit im Vakuum; $n_d$ = effektive Brechungsindex der dotierten Faser 3; $L_d$ = Länge der dotierten Faser; $n_a$, $n_b$ = effektive Brechungsindizes des eingekoppelten Modes in den beiden Sensorfasersegmenten 5a, 5b und $L_a$, $L_b$ = Längen der Sensorfasersegmente 5a, 5b. Für den orthogonal eingekoppelten Mode oder den zweiten Raummode ergibt sich ein Frequenzabstand $\Delta \nu_o'$ wie in (G1) mit den zugehörigen Brechungsindizes $n_a'$, $n_b'$. Zur Vereinfachung der Rechnung, jedoch ohne Einschränkung der Allgemeinheit, wird angenommen, dass beide Sensorfasersegmente 4a, 4b von gleichem Typ und gleicher Länge sind, so dass gilt: $n_a' = n_b$, $n_b' = n_a$, $L_a = L_b$ und

$$\Delta \nu_o = \Delta \nu_o' = c/[2 \cdot (n_d \cdot L_d + (n_a + n_b) \cdot L)] \,. \qquad \text{(G2)}$$

Ohne Druck auf die Sensorfaser 5a, 5b sind dann die Doppelbrechungen $\Delta n_a = n_a - n_a'$ und $\Delta n_b = n_b - n_b'$ in den Segmenten 5a und 5b entgegengesetzt gleich und die Frequenzen beider Moden sind entartet. Wird ein Druck beispielsweise auf das Segment 5a ausgeübt, ändert sich die Doppelbrechung $\Delta n_a$ und die Phasenverschiebung $\Phi = (2 \cdot \pi/\lambda) \cdot L \cdot \Delta n_a$ proportional zum Druck:

$$\Delta \Phi = K_p \cdot p \cdot L \qquad \text{(G4)}$$

mit

$$K_p = 2 \cdot \pi/\lambda \cdot [\partial(\Delta n_a)/\partial p + (\Delta n_a/L) \cdot \partial L/\partial p] \,, \qquad \text{(G5)}$$

wobei $\Delta \Phi$ = induzierte Phasenverschiebung, $K_p$ = Proportionalitätskonstante, p = Druck und $\lambda$ = Wellenlänge des

Faserlasers 2. Dieser Ausdruck ist in erster Ordnung gültig und berücksichtigt nicht Abhängigkeiten höherer Ordnung von Druck und/oder Temperatur. Durch die Phasenverschiebung $\Delta\Phi$ werden die Eigenfrequenzen orthogonaler Moden des Faserlasers relativ zueinander verschoben. Wie aus den Fig. 2a und 2b ersichtlich ergeben sich dadurch die Schwebungsfrequenzen $\Delta\nu_1$ und $\Delta\nu_o - \Delta\nu_1$ und allgemein $m \cdot \Delta\nu_o \pm \Delta\nu_1$, $m = 1, 2, 3, \ldots$ Die Frequenzabstände bleiben praktisch unverändert und sind wie zuvor näherungsweise aequidistant und gleich. Der maximal messbare Druck ist durch die Bedingung gegeben, dass die Schwebungsfrequenz, beispielsweise die grundlegende $\Delta\nu_1$, eindeutig detektierbar sein soll, d. h. dass $\Delta\nu_1 < \Delta\nu_o / 2$ gilt. Dies entspricht einer maximal zulässigen druckinduzierten Phasenverschiebung $\Delta\Phi_{max} = \pi / 2$.

Zur Verdeutlichung einige quantitative Abschätzungen zum Druckmessbereich und Druckauflösungsvermögen: Kommerziell erhältliche polarisationserhaltende Fasern 5a, 5b mit elliptischem Kern zeigen eine typische hydrostatische bzw. isotrope Druckempfindlichkeit $K_p \approx 0{,}7$ rad / (MPa $\cdot$ m) bei $\lambda \approx 800$ nm. Wegen $K_p \sim 1/\lambda$ ist $K_p \approx 0{,}35$ rad / (MPa $\cdot$ m) bei $\lambda \approx 1550$ nm. Somit existiert bei dieser Wellenlänge eine obere Schranke für das Produkt aus Sensorfaserlänge L und Druck p

$$L \cdot p < \Delta\Phi_{max}/K_p = 4{,}5 \text{ MPa} \cdot \text{m} . \qquad\qquad \text{(G6)}$$

Beispielsweise können mit einem Sensorfasersegment 5a der Länge L = 4,5 cm Maximaldrücke bis zu 100 MPa (= 1000 bar) gemessen werden.

Das Druckauflösungsvermögen ist durch das Verhältnis von Linienbreite zur maximalen Schwebungsfrequenz $\Delta\nu_o / 2$ gegeben. Typische Werte für diese Grössen liegen im 1 - 10 kHz - Bereich und im 100 MHz - 1 GHz - Bereich. Beispielhaft sei eine dotierte Faser 3 von 25 cm. Sensorfasersegmente 5a, 5b von je 5 cm und ein mittlerer effektiver Brechungsindex von 1,45 angenommen. Dann beträgt gemäss Gleichung (G2) der Frequenzabstand $\Delta\nu_o = 295$ MHz und die Wellenlängenseparation zwischen benachbarten Longitudinalmoden $\Delta\lambda = \lambda^2 / c \cdot \Delta\nu_o = 0{,}0024$ nm.

Weitere Designkriterien für die Auslegung des erfindungsgemässen Faserlaser 2 und insbesondere der Faser - Bragg - Gitter 4a, 4b werden im Zusammenhang mit Fig. 2c erläutert. Das Emissionsspektrum des Faserlasers 2 besteht aus den Longitudinalmoden 33, welche innerhalb des Fluoreszenzspektrums der dotierten laserverstärkenden Faser 3 und der Reflexionsspektren 34 der Faser - Bragg - Gitter 4a, 4b liegen und dort mehr Verstärkung als Verluste erfahren. Mit Vorteil ist der Faserlaser 2 so optimiert dass die Laserschwelle niedrig ist, wenige Longitudinalmoden 33 anschwingen und eine geringe Temperaturempfindlichkeit des Laserverhaltens resultiert Daraus ergibt sich für die Dimensionierung der Faser - Bragg - Gitter 4a, 4b das Optimierungsproblem, eine hohe Reflektivität R und eine geringe spektrale Breite oder Bandbreite $\Delta\nu_B$ zu erzielen und storende Temperatureffekte zu eliminieren

Faser - Bragg - Gitter 4a, 4b sind mit hohen Reflektivitaten bis zu annahernd 100 % und kleinsten Bandbreiten bts ca. $\Delta\nu_B = 0.2$ nm bei einer Bragg - Wellen-länge $\lambda_B \approx 1550$ nm erhältlich. Die spektrale Position des Reßexionsmaximums, charakterisiert durch die Bragg - Wellenlänge $\lambda_B$ bzw. die Bragg - Frequenz $\nu_B$, verschiebt sich mit der Temperatur um typischerweise 0,01 nm / $^\circ$C bei $\lambda_B \approx 1550$ nm. Für eine tiefe Laserschwelle ist es von Vorteil, wenn die Reflektivität des ersten Faser - Bragg - Gitters 4a im Bereich 85% - 99%, insbesondere gleich 90%, und die des zweiten Faser - Bragg - Gitters 4b grösser als 98%, insbesondere grösser als 99%, gewählt ist. Eine geringe Anzahl aktiver Longitudinalmoden 33 ist einerseits durch eine kurze Faserlaserlänge $L_d + 2 \cdot L$ und andererseits durch die Wahl kleiner spektraler Breiten $\Delta\nu_B^{(1)}$, $\Delta\nu_B^{(2)}$ der Faser - Bragg - Gitter 4a, 4b realisierbar. Bevorzugt sind die Bandbreiten $\Delta\nu_B^{(1)}$, $\Delta\nu_B^{(2)} < 0{,}7$ nm, insbesondere $\Delta\nu_B^{(1)}$, $\Delta\nu_B^{(2)} < 0{,}3$ nm gewählt. Durch die Einschränkung auf einige wenige Longitudinalmoden 33 wird einer Linienverbreiterung der Schwebungsfrequenzen durch Dispersion im Faserlaser 2 entgegengewirkt.

Durch unterschiedliche Verschiebungen der Reflexionswellenlängen, z. B. aufgrund unterschiedlicher Temperaturen der Faser - Bragg - Gitter 4a, 4b, können die Verluste im Faserlaser 2 ungebührend erhöht werden. Eine erfindungsgemässe Vorsichtsmassnahme besteht darin, beide Gitter mit gleicher Reflexionswellenlänge und eines der Gitter mit grösserer Bandbreite ($\Delta\nu_B^{(1)} > \Delta\nu_B^{(2)}$) zu wählen, um immer eine vollständige Überlappung der Reflexionsspektren zu gewährleisten. Insbesondere ist die eine Bandbreite $\Delta\nu_B^{(1)}$ zweimal und bevorzugt dreimal so gross wie die andere $\Delta\nu_B^{(2)}$. Eine günstige Wahl ist z. B. $\Delta\nu_B^{(1)} = 0{,}6$ nm und $\Delta\nu_B^{(2)} = 0{,}2$ nm.

Bei der laserverstärkenden Faser 3 handelt es sich mit Vorteil um eine mit einigen 100 ppm Erbium ($Er^{3+}$) - Ionen dotierte Faser 3, die Absorptionsbänder u. a. bei 1480 nm und 980 nm und optische Verstärkung oberhalb 1000 nm und im Spektralbereich 1530 nm - 1570 nm aufweist. Kommerzielle Pumplaserdioden 8 sind sowohl für 1480 nm als auch für 980 nm erhältlich. Eine 1480 nm Pumplaserdiode ist bei grossen Entfernungen von einigen km zwischen Pumplaser 8 und Faserlaser 2 und/oder bei vielen Faserlasern 2 in Multiplexanordnung vorzuziehen, da das Pumplicht geringere Verluste in den Zuführungsfasern 7a - 7d erleiden. Auch sind optische Komponenten für 1550 nm gut erhältlich. Die Absorption von Pumplicht beträgt für eine $Er^{3+}$ - Dotierungskonzentration von 220 ppm typischerweise 3,3 dB / m bei 1480 nm. Die Laserschwelle liegt je nach optischen Verlusten in der Grössenordnung einiger mW absorbierter Pumpleistung. Die Pumplichtquelle weist vorzugsweise eine optische Leistung über 100 mW auf. Auch andere Dotierungen und Spektralbereiche können genutzt werden. Beispielhaft seien als seltene Erden - Elemente Praesodym ($Pr^{3+}$) mit Emission bei 1300 nm, Neodym ($Nd^{3+}$) bei 1060 nm oder Thullium ($Tm^{3+}$) bei 810 nm genannt. Die Pumpwellenlänge und die Reflexionswellenlänge der Faser - Bragg - Gitter 4a, 4b sind entsprechend anzupassen.

Die Fig. 1a und 3 zeigen Anordnungen zur Erzeugung und Detektion der Schwebungsfrequenz(en) für polarimetrische Sensorfasern 5, 5a, 5b. Das vom Faserlaser 2 emittierte Licht wird (überwiegend) auf der Seite des weniger reflektierenden Faser - Bragg - Gitters, d. h. 4a in einer Reflexionskonfiguration oder 4b in einer nicht dargestellten Transmissionskonfiguration, ausgekoppelt. Im folgenden sei eine polarimetrische Reflexionsanordnung unterstellt. Im Faserkoppler 9 wird das Emissionslicht vom Pumplicht aufgrund der verschobenen Wellenlänge separiert. Rückreflexe in den Faserlaser 2 werden durch den vorzugsweise faseroptischen Isolator 11 und durch einen Schräganschliff des Endes der Faser 7d unterdrückt. In der Detektionseinheit werden die Polarisationsmoden x, y im Analysator 14 zur Interferenz gebracht. Der Orientierungswinkel des Analysators 14 relativ zu den Achsen der Polarisationsmoden x, y ist liegt zwischen 0° und 90° und insbesondere bei 45°. Der Analysator 14 kann massivoptisch oder einfacher als Faserpolarisator 14 ausgeführt sein. Im Detektor 15 wird das Interferenzsignal in ein intensitätsproportionales elektrisches Signal umgewandelt. Der Detektor 15, typischerweise eine Photodiode 15, benötigt hierfür eine Bandbreite, die grösser als die zu messende Schwebungsfrequenz ist. Im Frequenzfilter 18 wird das gewünschte Schwebungssignal separiert und einem Frequenzzähler 19 zugeführt. Alternative Ausführungsformen der Auswerteelektronik 17 können einen Radiofrequenz - Spektralanälysator, ein Oszilloskop oder andere Hochfrequenz - oder Mikrowellen - Messinstrumente umfassen.

In längeren oder gestörten Zuführungsfasern 7b - 7d kann die Polarisation der beiden Moden x, y leicht verlorengehen. Zur Wiederherstellung der Polarisation ist eine Polarisationskontrolle 13 vorgesehen, in welcher eine die Störungen kompensierende Doppelbrechung (Grösse und gegebenenfalls Achsenorientierung) erzeugt wird. Alternativ zur Polarisationskontrolle 13 können polarisationserhaltende Komponenten 7b - 7d, 9, 11 mit gleicher Orientierung wie der Analysator 14 verwendet werden. Als weitere Alternative kann das Schwebungssignal unmittelbar ausserhalb des Faserlasers 2 durch einen Faserpolarisator 14 (nicht dargestellt) erzeugt werden, der unter einem Winkel ≠ 0° oder 90°, insbesondere unter 45°, zu den Doppelbrechungsachsen der Sensorfaser 5, 5a, 5b orientiert ist.

Fig. 3 zeigt eine andere Alternative, bei welcher die Detektionseinheit 12 einen polarisationserhaltenden Faserkoppler 22 mit zwei unter 0° (±10°) und 45° (±10°) orientierten Analysatoren 14a, 14b und zwei Detektoren 15a, 15b aufweist. Die Analysatoren sind vorzugsweise Faserpolarisatoren 14a, 14b, die über Spleisse 21a, 21b mit dem Faserkoppler 22 verbunden sind. Die Auswerteelektronik 17 umfasst zusätzlich einen Summierer 20, mit dessen Eingängen die Detektoren 15a, 15b über Signalleitungen 16a, 16b verbunden sind. Eine weitere Alternative zur Erzeugung von Interferenz zwischen den Polarisationsmoden x, y besteht darin, eine starke Kopplung zwischen den Moden x, y zu erzeugen, beispielsweise durch Mikroverbiegungen ("micro - bending") der Faser hinter dem optischen Isolator 11.

Fig. 4 stellt eine stark vereinfachte Variante zu Fig. 1 dar, bei welcher anstelle einer einmodigen eine zweimodige Sensorfaser 5a, 5b mit elliptischem Kern Verwendung findet. Die Interferenzbildung zwischen den räumlichen Moden $LP_{01}$ und $LP_{11}^{gerade}$ erfolgt unmittelbar am transversal versetzten Spleiss 10c. Dadurch entfällt die Notwendigkeit einer Polarisationskontrolle 13 und eines Analysators 14 vor dem Detektor 15. Mit Vorteil ist in oder neben dem Faserlaser 2 ein Faserpolarisator 1.1 z. B. mit Spleissen 10d und 10e eingefügt. Dann können die raumlichen Moden $LP_{01}$ und $LP_{11}^{gerade}$ nur mit einer linearen Polarisation x oder y anschwingen und die Anzahl Schwebungsfrequenzen ist halbiert. Dieser Sensoraufbau zeichnet sich durch eine deutlich reduzierte Komplexität und sehr gute Eignung für Multiplexanordnungen gemäss Fig. 5 aus.

Fig. 5 zeigt eine Multiplexanordnung, die mehrere Faserlaser 2 unterschiedlicher Emissionswellenlängen $\lambda_1, ..., \lambda_i$, umfasst. Die Faserlaser 2 stehen mit genau einer Pumplichtquelle 8 und genau einer Detektionseinheit 12 in optischer Verbindung. Die Detektionseinheit 12 weist einen Wellenlängendemultiplexer 23 und einen Mehrkanal - Detektor 24 auf, der mit einer Mehrkanal - Auswerteelektronik 17 in elektrischer Verbindung steht. In jedem Kanal wird eine Schwebungsfrequenz wie zuvor beschrieben detektiert. Insbesondere umfasst die Auswerteelektronik 17 für jeden Faserlaser 2 einen Frequenzfilter 18 und einen Frequenzzähler 19. Für die dargestellte serielle Multiplexanordnung sind die Dotierungskonzentrationen und Längen der laserverstärkenden Fasern 3 so gewählt, dass in jedem Faserlaser 2 genügend Pumpleistung absorbiert und genügend Pumpleistung für die nachfolgenden Faserlaser 2 transmittiert wird. Es ist daher sehr vorteilhaft, dass separate Verstärkungsfasern 3 und Sensorfasern 5, 5a, 5b vorgesehen sind und das Laserverhalten und die Druckempfindlichkeit des Sensors 1 unabhängig voneinander optimierbar sind. Der Abstand zwischen den Emissionswellenlängen ist so gross gewählt, dass die Reflexionsspektren aller Faserlaser 2 auch bei Temperaturdifferenzen überlappungsfrei bleiben und eine spektrale Trennung der Signale im Demultiplexer 23 möglich ist. Somit benötigt jeder Faserlaser 2 für einen Temperaturbereich zwischen 0 °C und 230 °C ein Wellenlängenfenster von mindestens 2,4 nm. Die Multiplexanordnung kann auch parallel oder netzwerkartig aufgebaut sein. Beispielsweise kann das Pumplicht auch neben den Faserlasern 2 geführt sein und diesen einzeln über Faserkoppler zugeführt werden. Die Ausbreitungsrichtungen von Pumplicht und Laseremission dürfen gleiche Richtung haben. Vorteilhaft an einer Wellenlängen - Multiplexanordnung ist es, dass der grundlegende Aufbau, insbesondere die Reflexionskonfiguration mit einem die Pumpwellenlänge selektierenden Faserkoppler 9, beibehalten werden kann und die Kanaltrennung auf einfache Weise mit dem optischen Wellenlängendemultiplexer 23 durchführbar ist.

Die Fig. 6 - 9 zeigen Ausführungsbeispiele zu Druckgehäusen 25 mit temperaturkompensierten Sensorfasersegmenten 5a, 5b. Die Idee besteht darin, die Endreflektoren 4a, 4b, die laserverstärkende Faser 3 und das Referenzfasersegment 5a oder 5b abzuschirmen und nur das Messfasersegment 5b oder 5a dem zu messenden Druck p des Mediums 30 auszusetzen. Ferner ist ein kleiner, schlanker, mechanisch und thermisch stabiler Sensoraufbau 2 erwünscht.

Die erfindungsgemässe Lösung besteht darin, dass der Faserlaser 2 in einem druckfesten Gehäuse 25 mit mehreren Druckkammern 27a - 27c und druckdichten Faserdurchführungen 28a - 28d montiert ist und eine erste Druckkammer 27c, die ein Messfasersegment 5a; 5b der Sensorfaser 5 enthält, in direktem Druckaustausch mit dem umgebenden Medium 30 steht. Die Durchführungen 28a- 28d schaffen eine faseroptische Verbindung zwischen den Druckkammern 27a - 27c und nach aussen. Das Gehäuse 25 hat vorzugsweise drei Druckkammern 27a - 27c, eine längliche, insbesondere zylindrische, Gestalt, eine im wesentlichen dem Faserlaser 2 entsprechende Länge und einen Durchmesser von maximal 10 mm. Bevorzugt weist das Gehäuse 25, insbesondere die Druckkammer 27c, für den Druckaustausch eine Öffnung 26 auf, die mit einer Druckmembran 32 versehen ist, und enthält ein Fluid 31, beispielsweise Silikonöl. Auf diese Weise wird der Umgebungsdruck p allseitig auf das Messfasersegment 5a; 5b übertragen und diese vor direktem Kontakt mit dem Medium 30 geschützt.

Im Detail zeigen die Fig. 6 - 9, dass in einer zweiten Druckkammer 27a ein Faser - Bragg - Gitter 4a und die laserverstärkende Faser 3 und in einer dritten Druckkammer 27b ein Faser - Bragg - Gitter 4b und ein Fasersegment 5b der Sensorfaser montiert sind. Die zweite und dritte Druckkammer 27a, 27b stehen vorzugsweise unter Vakuum, Niederdruckgas oder Normaldruck. Sie können als Innenkapillare 27a, 27b (Fig. 6) oder als Gehäuseabteile (Fig. 7) realisiert sein. Günstigerweise sind die Innenkapillare 27a, 27b. zylindrisch und bestehen aus korrosionsbeständigem Stahl oder Quarzglas, welches einen optimal an die Fasern 3, 4a, 4b, 5a, 5b angepassten thermischen Ausdehnungskoeffizienten besitzt. Die Fasern 3, 4a, 4b, 5a, 5b sind spannungsfrei in den Druckkammern 27a - 27c befestigt, um Faserdehnungen aufgrund thermischer oder mechanischer Belastungen des Gehäuses 25 zu vermeiden. Bei einem einzelnen Faserlaser 2 oder dem letzten in einer Multiplexanordung entfallen Zuleitungsfaser 7d und Faserdurchführung 28d, und die Faser mit dem Faser - Bragg - Gitter 4b kann innerhalb des Gehäuses 25 enden (Fig. 7). Anstelle des ersten Fasersegments 5a kann auch das zweite 5b dem Umgebungsdruck p unterworfen sein (Fig. 8).

Ferner kann eine einmodige Zwischenfaser 35 im Bereich der druckdichten Faserdurchführung 28c zwischen den Fasersegmenten 5a, 5b angeordnet sein (Fig. 9). Die Zwischenfaser 35 dient dazu, die Kraft der Faserdurchführung 28 c aufzunehmen und eine weitgehend kräftefreie Halterung der Sensorfasern 5a, 5b zu ermöglichen. Vorzugsweise hat die Zwischenfaser 35 einen elliptischen Kern, durch den eine fixe, weitgehend kraftunabhängige Achsenorientierung der Doppelbrechung gewährleistet ist. Die orthogonalen Moden x, y oder $LP_{01}$, $LP_{11}^{gerade}$ der Sensorfasern 5a. 5b sollen durch die gleichen Moden oder vorzugsweise den gleichen Mode in der Zwischenfaser 35 übertragen werden, um druckbedingte Phasenverschiebungen in der Zwischenfaser 35 inhärent zu kompensieren. Die Kernellipse der Zwischenfaser 35 soll deshalb im Falle polarimetrischer Monomode - Sensorfasern 5a, 5b unter 45° (±10°) und im Falle räumlicher Zweimoden - Sensorfasern 5a, 5b parallel oder orthogonal (±10°) zu den Achsen der Segmente 5a, 5b stehen. Im letzteren Fall sind die zusätzlichen Spleisse 6 transversal versetzt, um beide Raummoden der Segmente 5a, 5b möglichst gleichmässig ein- und auszukoppeln. Die orthogonalen Moden werden nur teilweise über Kreuz gekoppelt und es treten zusätzliche, temperaturabhängige Schwebungsfrequenzen auf. Die Wirksamkeit der passiven Temperaturkompensation ist somit gewahrt

Das erfindungsgemässe Druckgehause 25 für den Faserlaser - Drucksensor 1 weist mehrère Vorteile auf. Das Gehause 25 zeichnet sich durch Kompaktheit, geringes Gewicht und grosse mechanische und thermische Belastbarkeit aus. Es ist mit seiner dünnen, länglichen Gestalt einer optischen Faser optimal angepasst und sehr gut für den Einsatz in grossen Faserstrecken 7a - 7d mit vielen Druckmessstellen insbesondere in Olforderbohrlochern geeignet. Im Gehause 25 konnen problemlos Fasern 3, 4a, 4b, 5a, 5b montiert sein, die eine hochtemperaturtaugliche Faserummantelung, z. B. aus Polyimide oder Metall, und/oder ein Faserkabel 29 aufweisen. Auch sind spezielle Faserummantelungen zur Anpassung der akustischen Impedanz zwischen Sensorfaser 5, 5a, 5b und Medium 30 oder Fluid 31 beispielsweise für (Ultra)Schalldetektoren auf einfache Weise realisierbar.

Die Reihenfolge der Fasern 3, 5a, 5b im Faserlaser 2 ist i. a. beliebig. Insbesondere kann die dotierte Faser auch am hinteren Ende des Faserlaser 2 oder zwischen den beiden Sensorfasersegmenten 5a, 5b angeordnet sein. Die Sensorfaser 5a, 5b kann auch aus einer polarimetrischen Monomodefaser 5a und einer Zweimodenfaser 5b bestehen. Dann ist z. B. eine polarimetrische Druckmessung und eine Zweimodenfaser - Temperaturmessung oder umgekehrt möglich. Im Falle einer einstückigen Sensorfaser 5 entfällt jeweils das vor dem Umgebungsdruck p geschützte Fasersegment 5a oder 5b, und die Druckgehäuse 25 aus den Fig. 6 - 8 vereinfachen sich entsprechend. Generell können die Faser - Bragg - Gitter 4a, 4b direkt in die dotierte laserverstärkende Faser 3 und/oder in die Sensorfaser 5, 5b geschrieben sein. Für besonders kompakte Faserlaser - Drucksensoren 2 können auch die laserverstärkende Faser 3 und die Sensorfaser 5. 5a, 5b identisch sein, d. h. die Sensorfaser 5, 5a, 5b ist mit seltenen Erden - Ionen dotiert und wirkt zugieich als laserverstärkende Faser 3. Dann sind sowohl der maximal messbare Druck als auch näherungsweise die Laserschwelle umgekehrt proportional zur Lange der Sensor - Laser - Faser 5, 5a, 5b, 3.

Der erfindungsgemässe Faser - Laser Sensor 1 kann ausser zur Messung isotroper Drücke auch für andere Messgrossen ausgelegt sein. Beispielsweise sind auch anisotrope transversale oder longitudinale Kräfte oder Dehnungen und Temperaturen messbar. Zur Messung longitudinaler Dehnungen und von Temperaturen ist die Sensorfaser 5, 5a, 5b doppelbrechend und bevorzugt zweimodig gewählt. Dabei sind die oben beschriebenen Sensoraufbauten 2 so zu betreiben, dass die Messgrösse auf die einstückige Sensorfaser 5 oder auf ein Segment 5a, 5b einwirkt.

Insgesamt offenbart die Erfindung einen frequenzkodierten Faserlaser - Drucksensor 1 zur Messung vorzugsweise isotroper Drücke, dessen druckempfindliches Sensorelement aus einer vorzugsweise langgestreckten, rotationsasymmetrischen Sensorfaser 5, 5a, 5b besteht und der rein optisch ausgelesen wird, einfach multiplexierbar ist und in einem sehr kompakten, leichtgewichtigen und robusten Druckgehäuse 25 verpackt werden kann.

**BEZUGSZEICHENLISTE**

| | |
|---|---|
| 1 | Faserlaser - Drucksensor |
| 2 | Faserlaser |
| 3 | laserverstärkende Faser, dotierte Faser |
| 4a, 4b | Endreflektoren, Faser - Bragg - Gitter |
| 5, 5a, 5b | doppelbrechende Sensorfaser, Sensorfasersegmente; Fasern mit elliptischem Kern (einmodig oder zweimodig) |
| 51 | Faserkern |
| 52 | Faserhülle ("cladding") |
| 53 | seitliche Löcher |
| 6 | 90° - Spleiss |
| 7a - 7d | Zuführungsfasern |
| 8 | Pumplichtquelle, Pumplaser |
| 9 | Faserkoppler, Wellenlängenmultiplexer |
| 10a - 10f | Spleisse |
| 11 | optischer Isolator |
| 12 | Detektionseinheit |
| 13 | Polarisationskontrolle |
| 14, 14a, 14b | Analysator, Faserpolarisator |
| 15 | Detektor, Photodiode |
| 16 | Signalleitung |
| 17 | Auswerteelektronik |
| 18 | Frequenzfilter |

| 19 | Frequenzzähler |
|---|---|
| 20 | Summierer |
| 21a, 21b | 0°, 45° Spleisse |
| 22 | polarisationserhaltender Faserkoppler |
| 23 | Wellenlängendemultiplexer |
| 24 | Mehrkanal - Detektor |
| 25 | Gehäuse |
| 26 | Öffnung |
| 27a - 27c | Druckkammern, Gehäuseabteile |
| 27a, 27b | Innenkapillare |
| 28a - 28d | druckdichte Faserdurchführungen |
| 29 | Faserkabel |
| 30 | Medium |
| 31 | Fluid |
| 32 | Membran |
| 33 | Frequenzen der Longitudinalmoden |
| 34 | Reflexionsspektren der Bragg - Gitter |
| 35 | Zwischenfaser |
| $c$ | Lichtgeschwindigkeit im Vakuum |
| $L_a$, $L_b$, $L$ | Längen der Sensorfasersegmente |
| $L_d$ | Länge der laserverstärkenden Faser |
| $\lambda_B$ | Bragg - Wellenlänge |
| $\lambda_1$, ..., $\lambda_i$ | Emissionswellenlängen |
| $\nu$ | Frequenz des Faserlasers |
| $\nu_B$ | Bragg - Frequenz |
| $\Delta\nu_B$, $\Delta\nu_B^{(1)}$, $\Delta\nu_B^{(2)}$ | Bandbreiten der Faser - Bragg - Gitter |
| $\Delta\nu_o$, $\Delta\nu_o'$ | Frequenzabstand |
| $\Delta\nu_1$ | fundamentale Schwebungsfrequenz |
| $n_d$, $n_a$, $n_a'$, | $n_b$, $n_b'$ effektive Brechungsindizes |

| $\Delta n_a$, $\Delta n_b$ | Doppelbrechungen |
|---|---|
| i, m | Indizes |
| p | Druck |
| T | Temperatur |
| R | (normierte) Bragg - Reflektivität |

**Patentansprüche**

1. Faserlaser - Drucksensor (1), insbesondere geeignet zur Druckmessung in Erdölbohrlöchern, umfassend eine Pumplichtquelle (8), Zuführungsfasern (7a - 7d), einen Faserlaser (2), der eine laserverstärkende Faser (3) und mindestens zwei Endreflektoren (4a, 4b) aufweist, eine Detektionseinheit (12) und eine Auswerteelektronik (17), **dadurch gekennzeichnet, dass** zwischen den Endreflektoren (4a, 4b) neben der laserverstärkenden Faser eine Sensorfaser (5, 5a, 5b) mit einer nicht rotationssymmetrischen Struktur angeordnet ist.

2. Faserlaser - Drucksensör (1) nach Anspruch 1, **dadurch gekennzeichnet, dass** die Sensorfaser (5, 5a, 5b)

   a) einen elliptischen Kern, eine "bow-tie" - Struktur, eine "panda" - Struktur, eine "side-hole" - Struktur, eine "D-shape" - Struktur, eine elliptische Faserhülle oder eine teilweise angeschliffene Faserhülle aufweist und
   b) unmittelbar als ganzes oder teilweise einem zu messenden Druck ausgesetzt ist.

3. Faserlaser - Drucksensor (1) nach Anspruch 2, **dadurch gekennzeichnet, dass**

   a) die Sensorfaser (5, 5a, 5b) genau zwei Polarisationsmoden oder genau zwei Raummoden trägt,
   b) die Sensorfaser (5, 5a, 5b) aus genau zwei identischen Fasersegmenten (5a, 5b) besteht, die zueinander um 90° ($\pm$ 30°) oder 0° ($\pm$ 30°) verdreht sind und
   c) insbesondere eine Zwischenfaser (35) zwischen den Fasersegmenten (5a, 5b) angeordnet ist.

4. Faserlaser - Drucksensor (1) nach einem der Ansprüche 1 - 3, **dadurch gekennzeichnet, dass**

   a) die Endreflektoren Faser - Bragg - Gitter (4a, 4b) sind und
   b) insbesondere die Bragg - Wellenlänge ($\lambda_B$) ein Mass für die Temperatur ist.

5. Faserlaser - Drucksensor (1) nach Anspruch 4, **dadurch gekennzeichnet, dass**

   a) die Faser - Bragg - Gitter (4a, 4b) direkt in die laserverstärkende Faser (3) und/oder in die Sensorfaser (5, 5b) geschrieben sind und
   b) insbesondere eines der Faser - Bragg - Gitter (4a, 4b) mit grösserer Bandbreite, bevorzugt $\Delta v_B^{(1)}$ = 0,6 nm und $\Delta v_B^{(2)}$ = 0,2 nm, gewählt ist.

6. Faserlaser - Drucksensor (1) nach einem der Ansprüche 1 - 5, **dadurch gekennzeichnet, dass**

   a) die Sensorfaser (5, 5a, 5b) zweimodig ist,
   b) ein Faserpolarisator (14) in oder neben dem Faserlaser (2) angeordnet ist und
   c) insbesondere die Bragg - Wellenlänge ($\lambda_B$) im Spektralbereich einer verschwindenden Gruppenbrechungsindex - Doppelbrechung der Sensorfaser (5, 5a, 5b) gewählt ist.

7. Faserlaser - Drucksensor (1) nach einem der Ansprüche 1 - 6, **dadurch gekennzeichnet, dass**

   a) die Pumplichtquelle (8), der Faserlaser (2) und die Detektionseinheit (12) durch einen vorzugsweise wellenlängenselektiven Faserkoppler (9) in optischer Verbindung stehen,
   b) die Detektionseinheit (12) einen Analysator (14), einen Detektor (15) und insbesondere eine Polarisationskontrolle (13) umfasst und
   c) die Auswerteelektronik (17) einen Frequenzfilter (18) und einen Frequenzzähler (19) aufweist.

**8.** Faserlaser - Drucksensor (1) nach Anspruch 7, Merkmale a) und c), **dadurch gekennzeichnet, dass**

a) die Detektionseinheit (12) einen polarisationserhaltenden Faserkoppler (22) mit zwei unter 0° und 45° orientierten Analysatoren (14a, 14b) und zwei Detektoren (15a, 15b) aufweist und
b) die Auswerteelektronik (17) einen Summierer (20) umfasst.

**9.** Faserlaser - Drucksensor (1) nach einem der Ansprüche 1 - 8, **dadurch gekennzeichnet, dass**

a) mehrere Faserlaser (2) unterschiedlicher Emissionswellenlängen mit einer Pumplichtquelle (8) und einer Detektionseinheit (12) in optischer Verbindung stehen,
b) die Detektionseinheit (12) einen Wellenlängendemultiplexer (23) und einen Mehrkanal - Detektor (24) aufweist und
c) eine Mehrkanal - Auswerteelektronik (17) vorgesehen ist.

**10.** Faserlaser - Drucksensor (1) nach einem der Ansprüche 1 - 9, **dadurch gekennzeichnet, dass**

a) ein Faserlaser (2) in einem druckfesten Gehäuse (25) mit mehreren Druckkammern (27a - 27c) und druckdichten Faserdurchführungen (28a - 28d) montiert ist und
b) eine erste Druckkammer (27c), die ein Messfasersegment (5a; 5b) der Sensorfaser (5) enthält, in direktem Druckaustausch mit dem umgebenden Medium (30) steht.

**11.** Faserlaser Drucksensor (1) nach Anspruch 10, **dadurch gekennzeichnet, dass**

a) in einer zweiten Druckkammer (27a) ein Faser - Bragg - Gitter (4a) und die laserverstärkende Faser (3) montiert sind,
b) in einer dritten Druckkammer (27c) ein Faser - Bragg - Gitter (4b) und ein Fasersegment (5b) der Sensorfaser montiert sind und
c) insbesondere die zweite und dritte Druckkammer (27a, 27c) Innenkapillare (27a, 27c) mit druckdichten Faserdurchführungen (28a - 28d) sind.

**12.** Faser - Laser Sensor (1), insbesondere geeignet zur Messung von Dehnungen oder Temperaturen, umfassend eine Pumplichtquelle (8), Zuführungsfasern (7a - 7d), einen Faserlaser (2), der eine laserverstärkende Faser (3) und mindestens zwei Endreflektoren (4a, 4b) aufweist, eine Detektionseinheit (12) und eine Auswerteelektronik (17), **dadurch gekennzeichnet, dass** zwischen den Endreflektoren (4a, 4b) neben der laserverstärkenden Faser eine doppelbrechende, bevorzugt zweimodige Sensorfaser (5, 5a, 5b) mit einer nicht rotationssymmetrischen Struktur angeordnet ist.

**Claims**

**1.** Fibre laser pressure sensor (1), in particular suitable for pressure measurement in crude oil drill holes, comprising a pumped light source (8), feed fibres (7a - 7d), a fibre laser (2) which has a laser-amplifying fibre (3) and at least two end reflectors (4a, 4b), a detection unit (12) and an electronic evaluation system (17), **characterized in that**, in addition to the laser-amplifying fibre, a sensor fibre (5, 5a, 5b) with a non-rotationally symmetrical structure is arranged between the end reflectors (4a, 4b).

**2.** Fibre laser pressure sensor (1) according to Claim 1, **characterized in that** the sensor fibre (5, 5a, 5b)

a) has an elliptical core, a bow-tie structure, a panda structure, a side-hole structure, a D-shape structure, an elliptical cladding or a partially buffed cladding, and
b) is subjected directly as a whole or partially to a pressure to be measured.

**3.** Fibre laser pressure sensor (1) according to Claim 2, **characterized in that**

a) the sensor fibre (5, 5a, 5b) carries exactly two polarization modes or exactly two spatial modes,
b) the sensor fibre (5, 5a, 5b) consists of exactly two identical fibre segments (5a, 5b) which are twisted relative to one another by 90° (± 30°) or 0° (± 30°), and,
c) in particular, an intermediate fibre (35) is arranged between the fibre segments (5a, 5b).

**4.** Fibre laser pressure sensor (1) according to one of Claims 1 - 3, **characterized in that**

a) the end reflectors are fibre Bragg gratings (4a, 4b), and,
b) in particular, the Bragg wavelength ($\lambda_B$) is a measure of the temperature.

**5.** Fibre laser pressure sensor (1) according to Claim 4, **characterized in that**

a) the fibre Bragg gratings (4a, 4b) are written directly into the laser-amplifying fibre (3) and/or into the sensor fibre (5, 5b), and,
b) in particular, one of the fibre Bragg gratings (4a, 4b) is selected with a larger bandwidth, preferably $\Delta\nu_B^{(1)}$ = 0.6 nm and $\Delta\nu_B^{(2)}$ = 0.2 nm.

**6.** Fibre laser pressure sensor (1) according to one of Claims 1 - 5, **characterized in that**

a) the sensor fibre (5, 5a, 5b) is bimodal,
b) a fibre polarizer (14) is arranged in or besides the fibre laser (2), and,
c) in particular, the Bragg wavelength ($\lambda_B$) is selected in the spectral region of a vanishing group refractive index birefringence of the sensor fibre (5, 5a, 5b).

**7.** Fibre laser pressure sensor (1) according to one of Claims 1 - 6, **characterized in that**

a) the pumped light source (8), the fibre laser (2) and the detection unit (12) are optically connected by means of a preferably wavelength-selective fibre coupler (9),
b) the detection unit (12) comprises an analyser (14), a detector (15) and, in particular, a polarization controller (13), and
c) the electronic evaluation system (17) has a frequency filter (18) and a frequency counter (19).

**8.** Fibre laser pressure sensor (1) according to Claim 7, features a) and c), **characterized in that**

a) the detection unit (12) has a polarization-maintaining fibre coupler (22) with two analysers (14a, 14b) orientated at 0° and 45°, and two detectors (15a, 15b), and
b) the electronic evaluation system (17) comprises an adder (20).

**9.** Fibre laser pressure sensor (1) according to one of Claims 1 - 8, **characterized in that**

a) a plurality of fibre lasers (2) of different emission wavelengths are optically connected to a pumped light source (8) and a detection unit (12),
b) the detection unit (12) has a wavelength division demultiplexer (23) and a multichannel detector (24), and
c) a multichannel electronic evaluation system (17) is provided.

**10.** Fibre laser pressure sensor (1) according to one of Claims 1 - 9, **characterized in that**

a) a fibre laser (2) is mounted in a pressure-resistant housing (25) with a plurality of pressure chambers (27a - 27c) and pressure-tight fibre feedthroughs (28a - 28d), and
b) a first pressure chamber (27c), which contains a measuring fibre segment (5a; 5b) of the sensor fibre (5), is in direct pressure exchange with the surrounding medium (30).

**11.** Fibre laser pressure sensor (1) according to Claim 10, **characterized in that**

a) a fibre Bragg grating (4a) and the laser-amplifying fibre (3) are mounted in a second pressure chamber (27a),
b) a fibre Bragg grating (4b) and a fibre segment (5b) of the sensor fibre are mounted in a third pressure chamber (27c), and,
c) in particular, the second and third pressure chambers (27a, 27c) are inner capillaries (27a, 27c) with pressure-tight fibre feedthroughs (28a - 28d).

**12.** Fibre laser sensor (1), in particular suitable for measuring strains or temperatures, comprising a pumped light source (8), feed fibres (7a - 7d), a fibre laser (2) which has a laser-amplifying fibre (3) and at least two end reflectors (4a, 4b), a detection unit (12) and an electronic evaluation system (17), **characterized in that**, in addition to the laser-amplifying fibre, a birefringent, preferably bimodal sensor fibre (5, 5a, 5b) with a non-rotationally symmetrical structure is arranged between the end reflectors (4a, 4b).

**Revendications**

1.  Capteur de pression à laser à fibre (1), convenant particulièrement pour la mesure de pression dans les trous de forage pétrolier, comprenant une source de lumière de pompage (8), des fibres d'acheminement (7a - 7d), un laser à fibre (2) qui présente une fibre amplificatrice de laser (3) et au moins deux réflecteurs d'extrémité (4a, 4b), un module de détection (12) et un circuit électronique d'analyse (17), **caractérisé en ce qu'**une fibre de détection (5, 5a, 5b) ayant une structure non rotationnellement symétrique est disposée entre les réflecteurs d'extrémité (4a, 4b) en plus de la fibre amplificatrice de laser (3).

2.  Capteur de pression à laser à fibre (1) selon la revendication 1, **caractérisé en ce que** la fibre de détection (5, 5a, 5b)

    a) présente un noyau elliptique, une structure « bow-tie », une structure « panda », une structure « side-hole », une structure « D-shape », une gaine de fibre elliptique ou une gaine de fibre partiellement poncée et
    b) est exposée directement en entier ou en partie à une pression à mesurer.

3.  Capteur de pression à laser à fibre (1) selon la revendication 2, **caractérisé en ce que**

    a) la fibre de détection (5, 5a, 5b) comporte exactement deux modes de polarisation ou exactement deux modes spatiaux,
    b) la fibre de détection (5, Sa, 5b) se compose de exactement deux segments de fibre identiques (5a, 5b) qui sont pivotés de 90° (±30°) ou de 0° (±30°) l'un par rapport à l'autre, et
    c) en particulier, une fibre intermédiaire (35) est disposée entre les segments de fibre (5a, 5b).

4.  Capteur de pression à laser à fibre (1) selon l'une des revendications 1 à 3, **caractérisé en ce que**

    a) les réflecteurs d'extrémité sont des grilles de Bragg à fibre (4a, 4b) et
    b) en particulier, la longueur d'onde de Bragg ($\lambda_B$) est une mesure de la température.

5.  Capteur de pression à laser à fibre (1) selon la revendication 4, **caractérisé en ce que**

    a) les grilles de Bragg à fibre (4a, 4b) sont inscrites directement dans la fibre amplificatrice de laser (3) et/ou dans la fibre de détection (5, 5b), et
    b) en particulier, l'une des grilles de Bragg à fibre (4a, 4b) est choisie avec une bande passante plus grande, de préférence $\Delta\nu_B^{(1)} = 0{,}6$ nm et $\Delta\nu_B^{(2)} = 0{,}2$ nm.

6.  Capteur de pression à laser à fibre (1) selon l'une des revendications 1 à 5, **caractérisé en ce que**

    a) la fibre de détection (5, 5a, 5b) est bimodale,
    b) un polarisateur de fibre (14) est disposé dans le laser à fibre (2) ou à côté de celui-ci,
    c) n particulier, la longueur d'onde de Bragg ($\lambda_B$) est choisie dans la plage spectrale d'une biréfringence à indice de réfraction de groupe infiniment petit de la fibre de détection (5, 5a, 5b).

7.  Capteur de pression à laser à fibre (1) selon l'une des revendications 1 à 6, **caractérisé en ce que**

    a) la source de lumière de pompage (8), le laser à fibre (2) et le module de détection (12) se trouvent en liaison optique par un coupleur de fibre (9) de préférence à sélectivité de longueur d'onde,
    b) le module de détection (12) comprend un analyseur (14), un détecteur (15) et, en particulier, un contrôle de polarisation (13), et
    c) le circuit électronique d'analyse (17) présente un filtre de fréquence (18) et un compteur de fréquence (19).

8.  Capteur de pression à laser à fibre (1) selon la revendication 7, caractéristiques a) et c), **caractérisé en ce que**

    a) le module de détection (12) présente un coupleur de fibre maintenant la polarisation (22) muni de deux analyseurs (14a, 14b) orientés à 0° et à 45° et deux détecteurs (15a, 15b), et
b) le circuit électronique d'analyse (17) comprend un additionneur (20).

9. Capteur de pression à laser à fibre (1) selon l'une des revendications 1 à 8, **caractérisé en ce que**

a) plusieurs laser à fibre (2) ayant des longueurs d'onde d'émission différentes se trouvent en liaison optique avec une source de lumière de pompage (8) et un module de détection (12),
b) le module de détection (12) présente un démultiplexeur de longueur d'onde (23) et un détecteur multivoies (24), et
c) il est prévu un circuit électronique d'analyse multivoies (17).

10. Capteur de pression à laser à fibre (1) selon l'une des revendications 1 à 9, **caractérisé en ce que**

a) un laser à fibre (2) est monté dans un boîtier (25) résistant à la pression comprenant plusieurs chambres de pression (27a - 27c) et des traversées de fibre résistant à la pression (28a - 28d), et
b) une première chambre de pression (27c) qui contient un segment de fibre de mesure (5a ; 5b) de la fibre de détection (5) se trouve en échange de pression direct avec le fluide environnant (30).

11. Capteur de pression à laser à fibre (1) selon la revendication 10, **caractérisé en ce que**

a) une grille de Bragg à fibre (4a) et la fibre amplificatrice de laser (3) sont montées dans une deuxième chambre de pression (27a),
b) une grille de Bragg à fibre (4b) et un segment de fibre (5b) de la fibre de détection sont montés dans une troisième chambre de pression (27c), et
c) en particulier, les deuxième et troisième chambres de pression (27a, 27c) sont des capillaires internes (27a, 27c) comportant des traversées de fibre résistant à la pression (28a - 28d).

12. Capteur à laser à fibre (1), convenant particulièrement pour la mesure de dilatations ou de températures, comprenant une source de lumière de pompage (8), des fibres d'acheminement (7a - 7d), un laser à fibre (2) qui présente une fibre amplificatrice de laser (3) et au moins deux réflecteurs d'extrémité (4a, 4b), un module de détection (12) et un circuit électronique d'analyse (17), **caractérisé en ce qu'**une fibre de détection biréfringente (5, 5a, 5b), de préférence bimodale, ayant une structure non rotationnellement symétrique est disposée entre les réflecteurs d'extrémité (4a, 4b) en plus de la fibre amplificatrice de laser.